# EUROPÄISCHE PATENTSCHRIFT

(11) **EP 1 867 554 B1**
(45) Veröffentlichungstag und Bekanntmachung des Hinweises auf die Patenterteilung: **28.07.2010**
(21) Anmeldenummer: 07009378.6
(22) Anmeldetag: 10.05.2007
(51) Int. Cl.: B62D 5/04, B62D 7/02

(54) **Lenkantrieb für ein gelenktes Rad eines Flurförderzeugs, insbesondere eines Hinterrades eines Dreirad-Flurförderzeugs**
Steering actuator for a steered wheel of an industrial truck, in particular the rear wheel of a three-wheeled industrial truck
Actionnement de direction d'une roue directrice d'un chariot de manutention, en particulier une roue arrière d'un chariot de manutention à trois roues

(30) Priorität: 13.06.2006 DE 102006027369
(43) Veröffentlichungstag der Anmeldung: 19.12.2007
(73) Patentinhaber: Jungheinrich Aktiengesellschaft, 22047 Hamburg (DE)
(72) Erfinder: Rogg, Andreas, Dipl.-Ing., 23554 Lübeck (DE)
(74) Vertreter: Hauck Patent- und Rechtsanwälte

(56) Entgegenhaltungen:
- EP-A- 1 808 323
- EP-A- 1 857 317
- DE-A1- 19 911 458

## Beschreibung

Die Erfindung bezieht sich auf ein Flurförderzeug nach dem Oberbegriff des Patentanspruchs 1.

Elektrogetriebene Gegengewichtsstapler mit einem Dreirad-Fahrwerk weisen zumeist ein gelenktes, nicht angetriebenes Hinterrad auf. Das Hinterrad ist meist als Zwillingsrad ausgeführt und mit Hilfe eines Lenkschemels drehbar am Fahrzeugrahmen angebracht. Die Lenkbewegung wird mittels einer Zahnstange oder eines Getriebes auf den Drehschemel übertragen.

Aus DE 101 13 775 A1 ist ein Lenkantrieb bekannt geworden, bei dem der Lenkmotor über ein Exzentergetriebe auf den Lenkschemel wirkt. Der Lenkschemel ist mittels eines Vierpunktlagers am Fahrzeugrahmen gelagert.

In EP-A-1 57 317 A1 ist ein Radnabenantrieb für Flurförderzeuge beschrieben. Antriebs- und Abtriebsachse des Antriebsgetriebes, Drehachse des Rades und Antriebsachse des Antriebsmotors sind koaxial angeordnet. Das Antriebsgetriebe ist ein ein- oder mehrstufiges Stufenplanetengetriebe oder ein Zwei- oder Mehrstufenplaten-Koppelgetriebe. Zwei horizontale Radlager befinden sich innerhalb des Antriebsgetriebes, wobei ein erstes Radlager zwischen einem mit der Radnabe verbundenen ersten Lagerabschnitt und einem rahmenfesten Planetenträger und ein zweites Radlager zwischen dem ersten Lagerabschnitt und einem rahmenfesten zweiten Lagerabschnitt oder dem rahmenfesten Planetenträger angeordnet ist. In einem derartigen Radnabenantrieb sollen die aus Antriebsgetriebe und Radlagerung bestehende Einheit besonders kompakt ausgeführt sein. Insbesondere soll mit einem möglichst kleinen Außendurchmesser gearbeitet werden können, wobei das Antriebsrad ein maximales Drehmoment übertragen soll.

Aus DE-A-199 11 458 A1 ist ein Lenkantrieb für einen um eine Vertikalachse schwenkbaren Radantrieb eines Flurförderzeugs bekannt geworden. Es weist einen Lenkmotor mit nachgeschaltetem Lenkgetriebe auf. Zur Reduzierung des Platzbedarfs des Lenkantriebs ist der Lenkantrieb direkt mit dem Radantrieb verbunden, und es ist eine Schwenklagerung vorgesehen, die zwischen dem Lenkmotor und dem Radantrieb angeordnet ist. Der Lenkmotor ist als elektrischer Scheibenläufermotor ausgebildet und das Lenkgetriebe als Planentengetriebe, beispielsweise Wolfromgetriebe.

Der Erfindung liegt die Aufgabe zugrunde, ein Flurförderzeug zu schaffen, das einen besseren Wirkungsgrad für ein Lenkgetriebe für ein gelenktes Hinterrad aufweist, eine kleinere Baugröße des Lenkmotors und des Lenkgetriebes ermöglicht sowie den Aufwand für die Lagerung des Lenkschemels reduziert.

Diese Aufgabe wird durch die Merkmale des Patentanspruchs 1 gelöst.

Bei der Erfindung wird das Hinterrad des Dreirad-Flurförderzeugs mittels Lenkschemel gelagert und das Lenkgetriebe weist ein zur Lenkachse koaxiales ein- oder mehrstufiges Stufenplanetengetriebe oder Planetenkoppelgetriebe auf, wobei die Lageranordnung für den Lenkschemel ist innerhalb des Lenkgetriebes angeordnet.

Dem Stufenplanetengetriebe bzw. das Planetenkoppelgetriebe kann ein weiteres Planetengetriebe vorgeschaltet sein.

Das Lenkgetriebe des erfindungsgemäßen Flurförderzeugs ermöglicht einen verbesserten Wirkungsgrad. Lenkmotor und Lenkgetriebe weisen eine kleine Baugröße auf. Durch die Anordnung des Lenkschemellagers innerhalb des Planetengetriebes können weniger aufwendige Lager verwendet werden. Durch Ausbildung von Baugruppen für Lenkschemel und Lenkantrieb kann der Montageaufwand reduziert werden.

In einer Ausgestaltung der Erfindung ist vorgesehen, daß der Innenring von mindestens einem Wälzlager an einem zentralen, mit dem Lenkschemel verbundenen Lagerbauteil abgestützt ist, während der Außenring an einem Getriebegehäuseabschnitt abgestützt ist. Vorzugsweise sind zwei axial beanstandete Wälzlager, insbesondere Kegelrollenlager, vorgesehen.

Ist ein Planetenkoppelgetriebe vorgesehen, dient das Lagerbauteil gleichzeitig als Planetenträger, wobei das Abtriebsrad des Getriebes von einem am Lenkschemel vorgesehenem Hohlrad gebildet ist. Das Hohlrad kann nach einer weiteren Ausgestaltung der Erfindung einteilig mit dem Lenkschemel geformt sein.

Nach einer anderen Ausgestaltung der Erfindung ist vorgesehen, daß Motorgehäuse und übereinander gestapelte scheibenartige Getriebegehäuseabschnitte ein geschlossenes Antriebsgehäuse bilden. Am Lenkschemel kann eine berührende Dichtung angeordnet sein, die mit einer zugewandten Dichtfläche des zugekehrten Gehäuseabschnitts dichtend zusammenwirkt. Dadurch wird die gesamte Lenkantriebseinheit gegen Schmutz, Feuchtigkeit usw. geschützt.

Weitere vorteilhafte Ausgestaltungen der Erfindung sind in weiteren Unteransprüchen angeführt.

Im Antriebsgehäuse können Sensoren und Baugruppen zur Steuerung des Lenkmotors angeordnet werden.

Ausführungsbeispiele der Erfindung werden nachfolgend anhand von Zeichnungen näher erläutert.
- Fig. 1: zeigt einen Schnitt durch eine erste Ausführungsform eines Lenkantriebs mit einem Planetenkoppelgetriebe für ein Flurförderzeug nach der Erfindung.
- Fig. 2: zeigt einen Schnitt durch eine zweite Ausführungsform eines Lenkantriebs mit einem zweistufigen Stufenplanetengetriebe.
- Fig. 3: zeigt vergrößert eine abgewandelte Einzelheit der Darstellung nach Fig. 1.
- Fig. 4: zeigt eine abgewandelte Einzelheit der Darstellung nach Fig. 1.
- Fig. 5: zeigt einen Schnitt durch Darstellung nach Fig. 4 entlang der Linie 5-5.
- Fig. 6: zeigt einen Lenkantrieb mit Drehwinkelsensor.

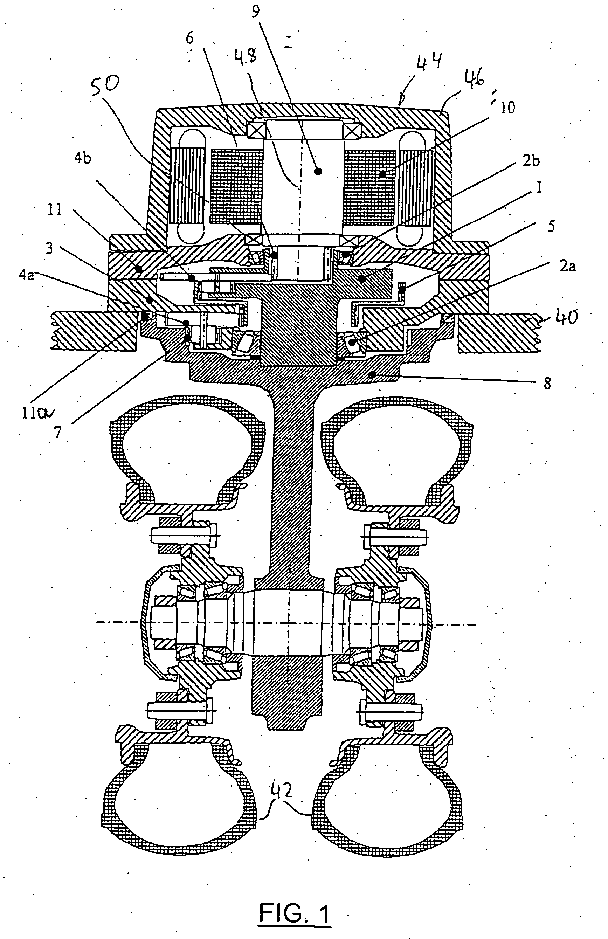

In Fig. 1 ist bei 40 ein Rahmen eines Dreirad-Flurförderzeugs angedeutet mit gelenktem, nicht angetriebenem Hinterrad. In Fig. 1 ist das Hinterrad ein sogenanntes Zwillingsrad 42, das in einem Lenkschemel 8 gelagert ist. Ein allgemein mit 44 bezeichnetes Antriebsgehäuse besteht aus einem becherartigen Motorgehäuseabschnitt 46 und zwei scheibenartigen, übereinanderliegenden Getriebegehäuseabschnitten 11, 3, wobei letzterer an dem Rahmen 40 befestigt ist, was jedoch nicht gezeigt ist. Der Lenkschemel 8 ist im oberen Bereich schalenartig geformt, wobei im Rand eine berührende Dichtung 11 a aufgenommen ist, welche mit der zugekehrten ebenen unteren Fläche des Gehäuseabschnitts 3 dichtend zusammenwirkt, um den Eintritt von Staub und Feuchtigkeit in das Antriebsgehäuse 44 zu verhindern.

Im Motorgehäuseabschnitt 46 befindet sich ein Elektromotor 10 mit einer Motorwelle 9, welche eine Achse 48 aufweist. Auf der Motorwelle 9 ist ein Ritzel 6 angeordnet oder einteilig mit dieser geformt. Motorwelle 9 und Lenkschemel 8 sind koaxial. Die Motorwelle 9 ist mittels eines Wälzlagers 50 am Gehäuseabschnitt 11 gelagert.

Im Getriebegehäuse ist ein Planetenkoppelgetriebe angeordnet mit Stufenplaneten 4a und 4b, welche über eine Koppelwelle 5 miteinander gekoppelt sind. Mit dem Lenkschemel 8 ist koaxial ein Lagerbauteil 1 fest verbunden, das für die Stufenplaneten 4b gleichzeitig Planetenträger ist. Der Planetenträger für die Stufenplaneten 4a wird vom Getriebegehäuseabschnitt 3 gebildet. Die untere Stufe der Stufenplaneten 4a wirkt mit einer Verzahnung 7 eines Hohlrads zusammen, das vom Lenkschemel 8 gebildet ist. Das Ritzel 6 wirkt mit der größeren Stufe der Stufenplaneten 4b zusammen, während die kleinere Stufe mit der Koppelwelle 5 zusammenwirkt. Somit ist der Abtrieb des Lenkgetriebes zum einen durch das am Lenkschemel befestigte Lagerbauteil 1 (Planetenträger) und zum anderen durch das mit dem Drehschemel 8 verbundene Hohlrad gebildet.

In der Darstellung nach Fig. 1 sind ferner zwei Kegelrollenlager 2a, 2b zu erkennen, welche axial beabstandet sind und deren Innenringe sich jeweils am Lagerbauteil 1 (Planetenträger) abstützen. Der Außenring des unteren Kegelrollenlagers 2a stützt sich am Getriebegehäuseabschnitt 3 ab, und der Außenring des oberen Kegelrollenlagers 2b stützt sich am Getriebegehäuseabschnitt 11 ab. Somit befindet sich die Lagerung des Lenkschemels 8 innerhalb des gezeigten Lenkgetriebes.

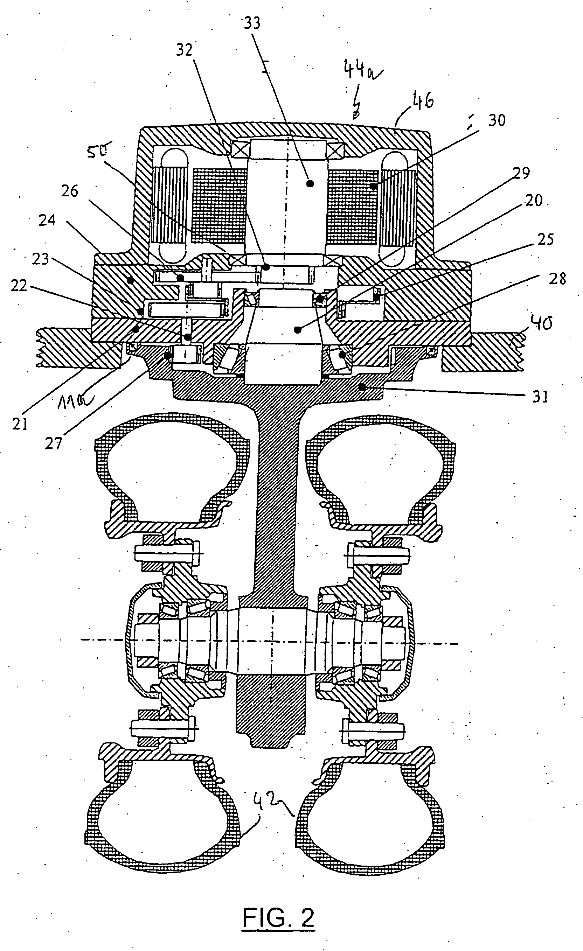

Soweit bei der Darstellung nach Fig. 2 mit der Darstellung nach Fig. 1 gleiche Bauteile verwendet werden, ist sie weitgehend mit den gleichen Bezugszeichen versehen.

Ein Antriebsgehäuse 44a wird von dem Motorgehäuseabschnitt 46, in dem ein Motor 30 angeordnet ist mit einer Motorwelle 33 und Getriebegehäuseabschnitten 24 und 21 gebildet, wobei letztere scheibenförmig übereinander angeordnet sind. Das Antriebsgehäuse 44a ist über den Getriebegehäuseabschnitt 21 mit dem Rahmen 40 fest verbunden, was im einzelnen nicht dargestellt ist. Eine berührende Dichtung 11 des Lenkschemels 31, der relativ ähnlich zum Lenkschemel 8 nach Fig. 1 geformt ist, wirkt mit der zugekehrten ebenen Fläche des Getriebegehäuseabschnitts 21 dichtend zusammen, um das Antriebsgehäuse 44a vor Eindringen von Schmutz und Feuchtigkeit zu schützen.

Die Motorwelle 33 weist ein Ritzel 32 auf, das mit der größeren Stufe von ersten Stufenplaneten 26 zusammenwirkt. Die Stufenplaneten 26 sind im Gehäuseabschnitt 24 gelagert, der mithin Planetenträger ist. Die kleinere Stufe der Stufenplaneten 26 ist über eine Verbindungswelle 25 mit der größeren Stufe von zweiten Stufenplaneten 22 gekoppelt. Die Stufenplaneten 22 sind im Gehäuseabschnitt 21 gelagert, der mithin Planetenträger ist. Die kleinere Stufe der Stufenplaneten 22 kämmt mit einem Hohlrad 27, das im Inneren des Lenkschemels 31 geformt ist.

Koaxial mit dem Lenkschemel 31 ist ein Zapfen 20 verbunden, der einen im Durchmesser größeren Abschnitt nahe dem Lenkschemel 31 hat und einen im Durchmesser kleinen Abschnitt nahe dem Ritzel 32. Ein erstes Wälzlager ist als Kegelrollenlager ausgebildet und stützt sich am Zapfen 20 im Abschnitt mit dem größeren Durchmesser ab, und ein zweites Kegelrollenlager 29 stützt sich an dem mit dem kleineren Durchmesser versehenen Abschnitt des Zapfens 20 ab, wobei beide Kegelrollenlager 28, 29 axial beabstandet sind. Der Zapfen 20, die Motorwelle 33 und der Lenkschemel 31 sind koaxial wie auch das gezeigte zweistufige Stufenplanetengetriebe. Der Abtrieb des gezeigten Lenkgetriebes erfolgt über das Hohlrad 27.

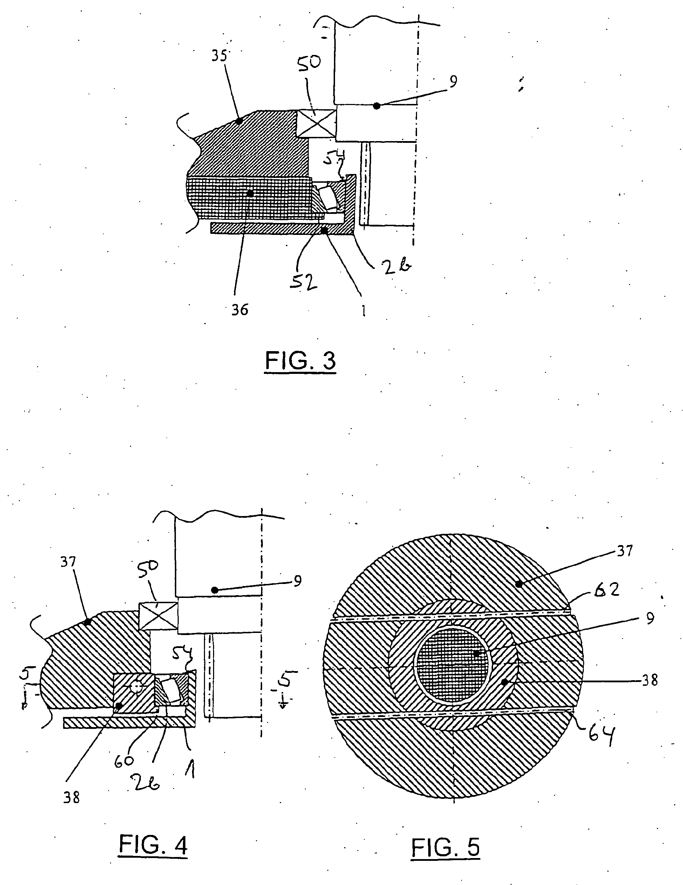

In Fig. 3 ist eine gegenüber Fig. 1 abgewandelte Besonderheit dargestellt. Dort ist der Getriebegehäuseabschnitt nach Fig. 1 durch zwei übereinanderliegende Abschnitte 35, 36 gebildet, wobei das Wälzlager 50 zwischen Motorwelle 9 und Gehäuseabschnitt 35 angeordnet ist, während das Wälzlager 2b zwischen dem Gehäuseabschnitt 36 und dem zugeordneten Abschnitt des Trägerbauteils 1 bzw. Planetenträger angeordnet ist. Der Gehäuseabschnitt 36 besitzt hierfür einen Absatz 52, auf dem sich der Außenring des Kegelrollenlagers 2b abstützt, während am Planetenträger 1 ein Federring 54 für die axiale Sicherung sorgt.

In einer anderen abgewandelten Ausführung gemäß Fig. 4 und 5 ist am Gehäuseabschnitt 37, der dem Gehäuseabschnitt 11 nach Fig. 1 entspricht, ein Lagerring 38 angeordnet, der in einer Ausnehmung des Gehäuseabschnitts 37 sitzt. Der Lagerring übernimmt dabei die Abstützfunktion für das Kegelrollenlager 2b, die in Fig. 3 vom Gehäuseabschnitt 36 übernommen wird. Der Lagerring 38 hat somit ebenfalls einen Absatz 60, der das Wälzlager 2b axial sichert.

Wie in Fig. 5 zu erkennen, ist der Lagerring 38 durch tangential angeordnete Stifte 62, 64 gesichert. Auf diese Weise kann der Lagerring 38 auf einfache Weise am Gehäuseabschnitt 37 montiert bzw. von ihm demontiert werden.

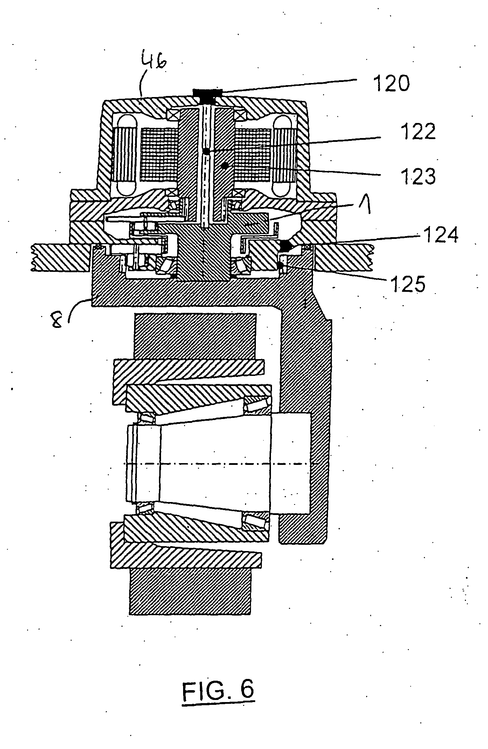

In Fig. 6 ist ein ähnlicher Lenkantrieb dargestellt wie etwa in Fig. 1, wobei jedoch ein Einzelrad gelenkt ist. Daher wird auf den Aufbau des Getriebes und das Zusammenwirken mit dem Lenkmotor nicht weiter eingegangen. Die Besonderheit besteht in Fig. 6 darin, daß eine Welle 123 des Lenkmotors hohl ausgeführt und eine Sensorwelle 122 hindurchgeführt ist. Am unteren Ende ist die Sensorwelle mit dem Planetenträger 1 (Fig. 1) drehfest verbunden. Mit dem oberen Ende wirkt die Sensorwelle 122 mit einem Drehwinkelsensor 120 zusammen, der am Gehäuse 46 des Lenkmotors angebracht ist. Der Lenkwinkelsensor 120 mißt den Lenkwinkel redundant zur Lenkwinkelerfassung im Lenkmotor. Eine redundante Lenkwinkelsensierung ist auch möglich mit einem Inkrementalsensor 124, der eine Kontur an einem mit dem Lenkschemel 8 verbundenen Bauteil, z. B. eine Verzahnung 125, abtastet.

## Patentansprüche

1. Flurförderzeug mit einem gelenkten Rad (42) mit einem das Rad (42), lagernden Lenkschemel (8, 31), der um eine vertikale Lenkachse (48) schwenkbar im Rahmen (40) des Flurförderzeugs gelagert ist, einem Lenkmotor (10) koaxial zur Lenkachse (48), einer Lageranordnung zwischen dem Rahmen des Flurförderzeugs und dem Lenkschemel (8, 31) und einem Lenkgetriebe zwischen Lenkmotor (10) und Lenkschemel (8, 31), **gekennzeichnet durch** ein Dreiradflurförderzeug, dessen Hinterrad mittels Lenkschemel (8, 31) gelagert ist, wobei das Lenkgetriebe ein zur Lenkachse (48) koaxiales ein- oder mehrstufiges Stufenplanetengetriebe oder Planetenkoppelgetriebe aufweist und die Lageranordnung für den Lenkschemel (8, 31) innerhalb des Lenkgetriebes angeordnet ist.

2. Flurförderzeug nach Anspruch 1, **dadurch gekennzeichnet, daß** der Innenring von mindestens einem Wälzlager (2a, 2b) an einem zentralen, mit dem Lenkschemel (8) verbundenen Lagerbauteil (1) abgestützt ist, während der Außenring an einem Getriebegehäuseabschnitt (11, 3) abgestützt ist.

3. Flurförderzeug nach Anspruch 2, **dadurch gekennzeichnet, daß** zwei axial beabstandete Wälzlager (2a, 2b), vorzugsweise Kegelrollenlager, vorgesehen sind.

4. Flurförderzeug nach einem der Ansprüche 1 bis 3, **dadurch gekennzeichnet, daß** das Lagerbauteil 1 gleichzeitig Planetenträger ist und das Abtriebsrad von einem am Lenkschemel (8) vorgesehenen Hohlrad (7) gebildet ist.

5. Flurförderzeug nach Anspruch 3 oder 4, **dadurch gekennzeichnet, daß** ein zweiter Planetenträger von einem Gehäuseabschnitt (3) gebildet ist, an dem sich auch das dem Lenkschemel (8) nähere Wälzlager (2a) abstützt.

6. Flurförderzeug nach Anspruch 3, **dadurch gekennzeichnet, daß** die Planetenträger des zweistufigen Stufenplanetengetriebes von zwei übereinanderliegenden separaten Getriebegehäuseabschnitten (24, 21) gebildet sind und die Wälzlager sich beide an dem den Lenkschemel (31) näheren Getriebegehäuseabschnitt (21) abstützen.

7. Flurförderzeug nach einem der Ansprüche 4 oder 5, **dadurch gekennzeichnet, daß** das Hohlrad (7, 27) einteilig mit dem Lenkschemel (8, 31) geformt ist.

8. Flurförderzeug nach einem der Ansprüche 1 bis 7, **dadurch gekennzeichnet, daß** Motorgehäuseabschnitt (46) und übereinander gestapelte scheibenartige Getriebegehäuseabschnitte (11, 3; 24, 21) ein geschlossenes Antriebsgehäuse (44, 44a) bilden und am Lenkschemel (8, 31) eine berührende Dichtung (11) angeordnet ist, die mit einer Dichtfläche des zugekehrten Gehäuseabschnitts (3, 21) dichtend zusammenwirkt.

9. Flurförderzeug nach einem der Ansprüche 3 bis 8, **dadurch gekennzeichnet, daß** eine Welle (9, 33) des Lenkmotors (10, 30) an dem Getriebegehäuseabschnitt (11) gelagert ist, an dem sich auch das dem Lenkmotor (10) nähere Wälzlager (2b) abstützt.

10. Flurförderzeug nach Anspruch 9, **dadurch gekennzeichnet, daß** der Gehäuseabschnitt aus zwei getrennten scheibenartigen, übereinanderliegenden Getriebegehäuseunterabschnitten (35, 36) gebildet ist, von denen jeder ein Lager (50, 54) aufnimmt.

11. Flurförderzeug nach Anspruch 9, **dadurch gekennzeichnet, daß** am Getriebegehäuseunterabschnitt (37) ein das Wälzlager (54) abstützender Lagerring (38) angebracht ist.

12. Flurförderzeug nach Anspruch 11, **dadurch gekennzeichnet, daß** der Lagerring (38) durch tangential angeordnete Stifte (62, 64) mit dem Getriebegehäuseabschnitt (37) lösbar verbunden ist.

13. Flurförderzeug nach einem der Ansprüche 1 bis 12, **dadurch gekennzeichnet, daß** mit dem Lenkschemel (8) oder einem mit dem Lenkschemel (8) verbundenen Getriebeteil (1) eine Sensorwelle (122) verbunden ist, die durch eine Hohlwelle (123) des Lenkmotors hindurchgeführt ist und die am vom Lenkgetriebe abgewandten Seite des Lenkmotors mit einem Drehwinkelsensor (120) zusammenwirkt.

## Claims

1. Industrial truck with a steered wheel (42) comprising a steering bolster (8, 31) supporting the wheel (42) which is supported to be pivotable about a vertical steering axle (48) inside the frame of the industrial truck, a steering motor (10) coaxial with the steering axle (48), a bearing assembly between the frame of the industrial truck and the bolster (8, 31), and a steering transmission between the steering motor (10) and bolster (8, 31), **characterized by** a three-wheeled industrial truck, the rear wheel of which being supported by the bolster (8, 31), wherein the steering transmission has a single-stage or multi-stage stepped planetary mechanism or planetary coupler mechanism coaxial with the steering axle (48) and the bearing assembly for the bolster (8, 31) is arranged within the steering transmission.

2. Industrial truck according to claim 1, **characterized in that** the inner race of at least one antifriction bearing (2a, 2b) is supported on a central bearing component (1) coupled to the bolster (8) while the outer race is supported on a transmission case portion (11, 3).

3. Industrial truck according to claim 2, **characterized in that** two axially-spaced antifriction bearings (2a, 2b) are provided, which preferably are tapered roller bearings.

4. Industrial truck according to any one of claims 1 to 3, **characterized in that** the bearing component (1) also is a planet pinion carrier and the driven wheel is defined by an internal gear (7) provided on the bolster (8).

5. Industrial truck according to claim 3 or 4, **characterized in that** a second planet pinion carrier is defined by a case portion (3) on which the antifriction bearing (2a) located closer to the bolster (8) is supported.

6. Industrial truck according to claim 3, **characterized in that** the planet pinion carriers of the two-stage stepped planetary mechanism is defined by two superimposed separate transmission case portions (24, 21) and both of the antifriction bearings are supported on the transmission case portion located closer to the bolster (31).

7. Industrial truck according to claim 4 or 5, **characterized in that** the internal gear (7, 27) is formed integrally with the bolster (8, 31).

8. Industrial truck drive according to any one of claims 1 to 7, **characterized in that** the motor case portion (46) and disc-like transmission case portions (11, 3; 24, 21) stacked on top of each other define a closed drive case (44, 44a) and the bolster (8,31) has disposed thereon a contacting gasket (11) which sealingly interacts with a sealing surface of the case portion facing it (3, 21).

9. Industrial truck according to any one of claims 3 to 8, **characterized in that** a shaft (9, 33) of the steering motor (10, 30) is held in a bearing on the transmission case portion (11) on which the antifriction bearing (2b) located closer to the steering motor (10) is also supported.

10. Industrial truck according to claim 9, **characterized in that** the case portion is formed from two separate disc-like, superimposed transmission case sub-portions (35, 36) each of which houses a bearing (50, 54).

11. Industrial truck according to claim 9, **characterized in that** a bearing ring (38) supporting the antifriction bearing (54) is mounted on the transmission case sub-portion (37).

12. Industrial truck according to claim 11, **characterized in that** the bearing ring (38) is detachably coupled to the transmission case portion (37) by tangentially arranged pins (62, 64).

13. Industrial truck according to any one of claims 1 to 12, **characterized in that** the bolster (8) or a transmission component (1) coupled to the bolster (8) has connected thereto a sensor shaft (122) which is passed through a hollow shaft (123) of the steering motor and interacts with a rotation angle sensor (120) at the steering motor side facing away from the steering transmission.

## Revendications

1. Chariot de manutention avec une roue directrice (42), avec un tabouret tournant (8, 31) logeant la roue (42) et étant logé de façon pivotante autour d'un axe de direction vertical (48) dans le châssis-cadre (40) du chariot de manutention, un moteur de direction (10) coaxial à l'axe de direction (48), une arrangement de palier entre le châssis-cadre du chariot de manutention et le tabouret tournant (8, 31), et avec une boîte de direction entre le moteur de direction (10) et le tabouret tournant (8, 31), **caractérisé par** un chariot de manutention à trois roues dont la roue arrière est logée à l'aide du tabouret tournant (8, 31), la boîte de direction présentant un engrenage planétaire étagé à une ou plusieurs étages et coaxial à l'axe de direction (48), et l'arrangement de palier pour le tabouret tournant (8, 31) étant disposé dans l'intérieur de la boîte de direction.

2. Chariot de manutention selon la revendication 1, **caractérisé en ce que** la bague intérieure d'au moins un palier à roulement (2a, 2b) est supporté sur un composant de palier (1) central et relié au tabouret tournant (8), pendant que la bague extérieure est supportée sur une partie (11, 3) du cage de la boîte de direction.

3. Chariot de manutention selon la revendication 2, **caractérisé en ce que** deux paliers à roulement (2a, 2b) axialement distants l'un de l'autre sont pourvus, de préférence des roulements à rouleaux coniques.

4. Chariot de manutention selon l'une quelconque des revendications 1 à 3, **caractérisé en ce que** le composant de palier (1) est le porte-planétaire au même temps, et la roue d'entraînement est formée par une roue dentée intérieure (7) pourvue dans le tabouret tournant (8).

5. Chariot de manutention selon la revendication 3 ou 4, **caractérisé en ce que** un deuxième porte-planétaire est formé par une partie du cage (3) sur lequel le palier à roulement (2a) plus proche au tabouret tournant (8) est supporté aussi.

6. Chariot de manutention selon la revendication 3, **caractérisé en ce que** les porte-planétaires de l'engrenage planétaire à deux étages sont formés par deux parties (24, 21) séparées et superposées du cage de la boîte de direction, et que les paliers à roulement sont les deux supportés sur la partie (21) du cage de la boîte de direction plus proche au tabouret tournant (31).

7. Chariot de manutention selon l'une quelconque des revendications 4 ou 5, **caractérisé en ce que** la roue dentée intérieure (7, 27) est formée en une seule pièce avec le tabouret pivotant (8, 31).

8. Chariot de manutention selon l'une quelconque des revendications 1 à 7, **caractérisé en ce que** la partie du cage de moteur (46) et les parties (11, 3, 24, 21) superposées en forme de disque du cage de la boîte de direction forment un cage d'entraînement fermé (44, 44a), et que un joint d'étanchéité touchant (11) est disposé dans le tabouret tournant (8, 31), ledit joint d'étanchéité coopérant de façon étanche avec une surface d'étanchéité de la partie de la cage (3, 21) tournée vers cela.

9. Chariot de manutention selon l'une quelconque des revendications 3 à 8, **caractérisé en ce que** un arbre (9, 33) du moteur de direction (10, 30) est logé sur la partie du cage de la boîte de direction (11), sur laquelle le roulement à rouleaux (2b) plus proche au moteur de direction est de même logée.

10. Chariot de manutention selon la revendication 9, **caractérisé en ce que** la partie du cage est formée de deux sous-parties (35, 36) du cage de la boîte de direction, séparées et superposées en forme de disque, dont chacun reçoit un palier (50, 54).

11. Chariot de manutention selon la revendication 9, **caractérisé en ce que** une bague de palier (38) supportant le roulement à rouleaux (54) est attachée dans la sous-partie (37) du cage de la boîte de direction.

12. Chariot de manutention selon la revendication 11, **caractérisé en ce que** la bague de palier (38) est reliée avec la partie du cage de la boîte de direction (37) de façon amovible par des broches (62, 64) disposées de façon tangentielle.

13. Chariot de manutention selon l'une quelconque des revendications 1 à 12, **caractérisé en ce que** un arbre de senseur (122) est relié au tabouret tournant (8) ou à une partie (1) de la boîte reliée au tabouret tournant (8), qui est guidé à travers de l'intérieur d'un arbre creux (123) du moteur de direction et qui coopère avec un capteur d'angle de rotation (120) dans le côté du moteur de direction détourné de la boîte de direction.
